# EUROPÄISCHE PATENTSCHRIFT

(11) **EP 0 716 966 B1**
(45) Veröffentlichungstag und Bekanntmachung des Hinweises auf die Patenterteilung: **16.08.2001**
(21) Anmeldenummer: 95119499.2
(22) Anmeldetag: 11.12.1995
(51) Int. Cl.: B60T 1/08, F16D 65/78

(54) **Antriebseinheit**
Propulsion unit
Unité d'entraînement

(30) Priorität: 16.12.1994 DE 4445024; 16.03.1995 DE 19509417
(43) Veröffentlichungstag der Anmeldung: 19.06.1996
(73) Patentinhaber: Voith Turbo GmbH & Co. KG, 89522 Heidenheim (DE)
(72) Erfinder: Adams, Werner, D-74564 Crailsheim (DE); Edelmann, Peter, D-89522 Heidenheim (DE); Friedrich, Jürgen, D-74564 Crailsheim (DE); Heilinger, Peter, D-74589 Satteldorf (DE); Rose, Peter, D-74532 Ilshofen (DE); Vogelsang, Klaus, D-74564 Crailsheim (DE)
(74) Vertreter: Dr. Weitzel & Partner

(56) Entgegenhaltungen:
- DE-A- 2 536 805
- DE-A- 4 408 350
- FR-A- 2 260 030
- GB-A- 2 056 017
- US-A- 3 951 242
- US-A- 5 333 707
- PATENT ABSTRACTS OF JAPAN vol. 012, no. 160 (M-697), 14.Mai 1988 & JP 62 279159 A (MITSUWA SEIKI CO LTD), 4.Dezember 1987,

## Beschreibung

Die Erfindung betrifft eine Antriebseinheit, im einzelnen mit den Merkmalen aus dem Oberbegriff des Anspruchs 1. Eine Antriebseinheit nach dem Oberbegriff des Anspruchs 1 ist aus dem Dokument DE-A-44 08 350 bekannt.

In Antriebsanlagen von Fahrzeugen oder stationären Anlagen ist als Mittel zur Geschwindigkeits- bzw. Drehzahlreduzierung häufig ein Retarder integriert. Der Retarder wird beim Einsatz im Kraftfahrzeug oder bei Anlagen mit stark wechselndem Betrieb durch Füllen und Entleeren des beschaufelten Arbeitskreislaufes mit einem Betriebsfluid ein- oder ausgeschaltet.

Weiterhin sind Antriebsanlagen von Fahrzeugen bekannt, bei denen eine hydrodynamische Bremse ständig gefüllt ist. Als Beispiel sei die US 3 951 242 genannt, bei der eine hydrodynamische Bremse im Motorgehäuse angeordnet ist, die im Schmiermittelkreislauf integriert ist. Das im ungebremsten Betrieb frei drehbare Turbinenrad wird im Bremsbetrieb durch eine Reibungsbremse festgesetzt, und bremst so das Pumpenrad und damit den Motor ab.

Die stationären oder fahrbaren Einheiten - beispielsweise Kraftfahrzeuge -, in welchen die genannten Antriebseinheiten eingebaut sind, haben in der Regel weitere Aggregate, die einer Kühlung bedürfen. Hierbei ist beispielsweise an Motoren, Bremsen, Kupplungen, Getriebe zu denken.

Diese anderen Aggregate können ebenfalls einen Kühlkreislauf aufweisen, um deren Arbeitsmedium zu kühlen.

Der Erfindung liegt die Aufgabe zugrunde, eine Antriebseinheit gemäß dem Oberbegriff von Anspruch 1 derart zu gestalten, daß der zum Kühlen des Retarders sowie ggf. weiterer Aggregate der zugeordneten, stationären oder fahrbaren Einheit verringert wird.

Diese Aufgabe wird durch die kennzeichnenden Merkmale von Anspruch 1 gelöst.

Die erfindungsgemäße Lösung der Aufgabe wird nachfolgend anhand von Figuren erläutert. Darin ist im übrigen folgendes dargestellt:
- Fig. 1a-1c;: zeigen eine andere Ausführung, die nicht nach der Erfindung ist, mit im Getriebe integriertem Retarder in verschiedenen Betriebszuständen;
- Fig. 2: eine Anordnung gemäß der Figur 1 im Bremsbetrieb mit vertauschten Lagern;
- Fig. 3a-3b: zeigen eine Ausführung entsprechend den Fig. 1 mit auf der Rotorschaufelradwelle fliegend gelagertem und getriebeseitig angeordnetem Ritzel;
- Fig. 4: zeigt eine Ausführung entsprechend den Fig. 1 mit auf der Rotorschaufelradwelle fliegend gelagertem und retarderseitig angeordneten Ritzel;
- Fig. 5: zeigt eine Ausführung mit im Getriebe integriertem Retarder;
- Fig. 6: zeigt eine Ausführung entsprechend Fig. 5 mit vertauschten Lagern;
- Fig. 7: zeigt eine Ausführung mit im Getriebe integriertem Retarder und mit auf der Rotorschaufelradwelle fliegend gelagertem und getriebeseitig angeordnetem Ritzel;
- Fig. 8: zeigt eine Ausführung entsprechend Fig. 7 mit vertauschten Lagern;
- Fig. 9a und 9b: zeigen Ausführungen mit im Getriebe integriertem Retarder und mit auf der Rotorschaufelradwelle fliegend gelagertem und retarderseitig angeordnetem Ritzel;
- Fig. 10: zeigt eine Ausführung entsprechend Fig. 6 mit einer in den Retarder integrierten zusätzlichen Förderpumpe.

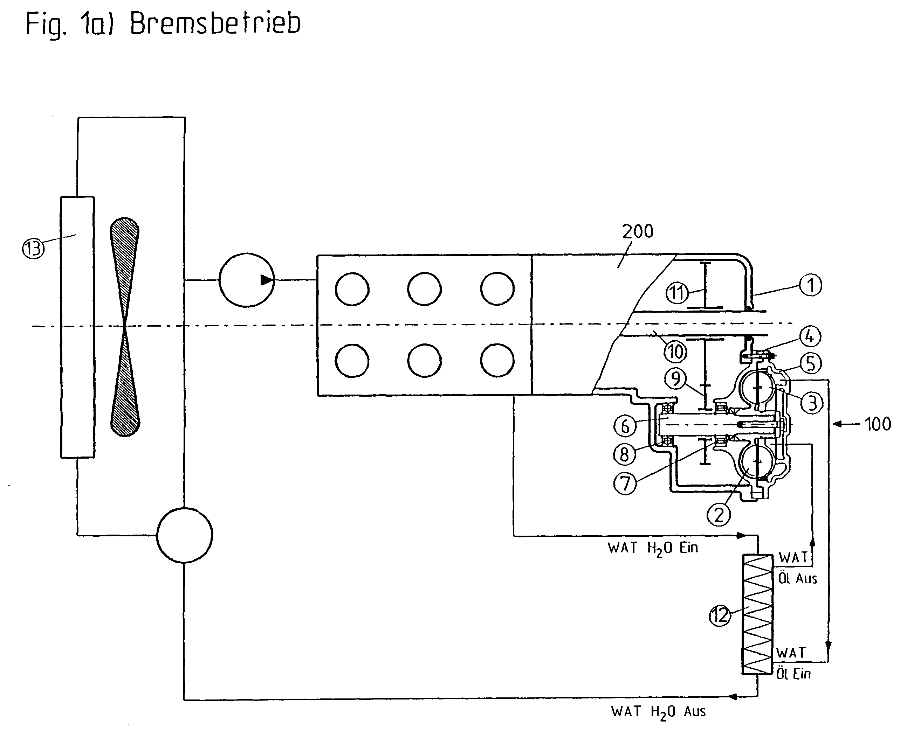

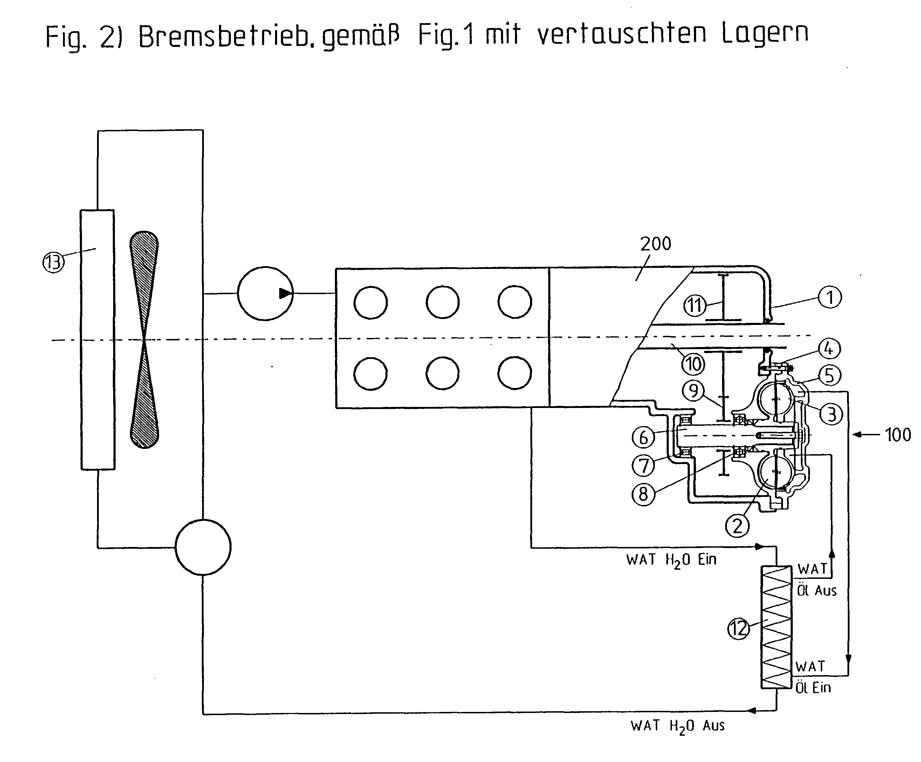

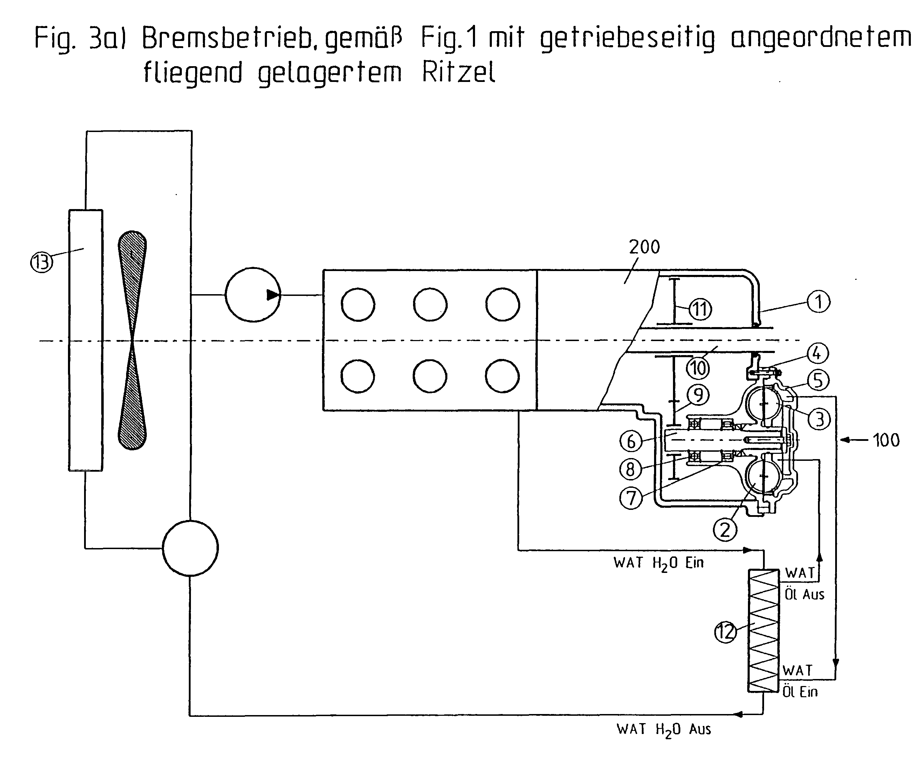

Die Figuren 1a-1c zeigen eine Ausführung mit im Getriebe integriertem Retarder in verschiedenen Betriebszuständen. Zur Verdeutlichung sind hier lediglich das Getriebe und die zur Funktionsweise erforderlichen Komponenten schematisch dargestellt. Ein hydrodynamischer Retarder 100 ist im Antriebsstrang in einem Getriebe 200, insbesondere ins Getriebeendgehäuse 1 integriert. Der hydrodynamische Retarder 100 umfaßt ein Rotorschaufelrad 2 und ein Statorschaufelrad 3 sowie ein Rotorschaufelradgehäuse 4 und ein Statorschaufelradgehäuse 5. Das Rotorschaufelrad ist drehfest mit einer Rotorschaufelradwelle 6 verbunden. Die Rotorschaufelradwelle 6 ist dabei parallel zu einer Getriebewelle 10, welche als Getriebein-, oder wie hier dargestellt, als Getriebeausgangswelle fungiert, angeordnet. Das Rotorschaufelrad 2 ist fliegend auf der Rotorschaufelradwelle 6 gelagert. Die Rotorschaufelradwelle 6 ist in diesem Beispiel im Getriebegehäuse 1 und im Rotorschaufelradgehäuse 4 gelagert. Die Lagerung, bestehend aus einem Loslager 7 und einem Festlager 8, befindet sich somit im Getriebe und kann deshalb über den Getriebeölhaushalt mit Schmieröl versorgt werden. Der Kraftfluß bzw. Drehmomentenfluß erfolgt über die Getriebewelle 10 auf die Rotorschaufelradwelle 6, die quasi als Nebenzweig fungiert. Zur Drehmomentenübertragung ist auf der Getriebewelle 10 ein Zahnrad 11 drehfest anordenbar, und dazu analog auf der Rotorschaufelradwelle 6 ein Ritzel 9.

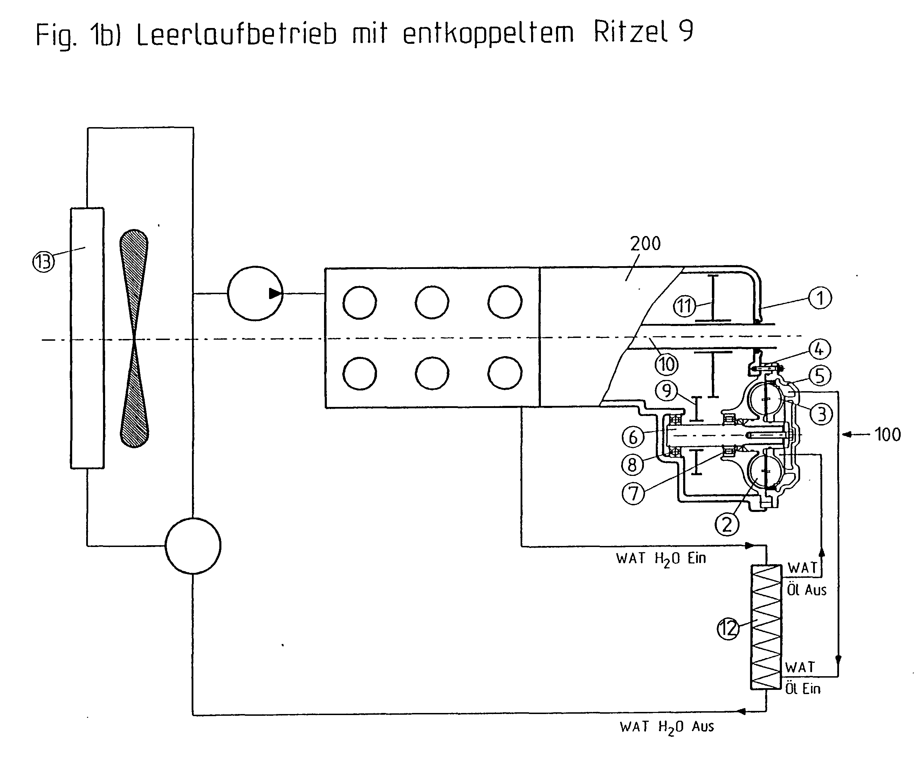

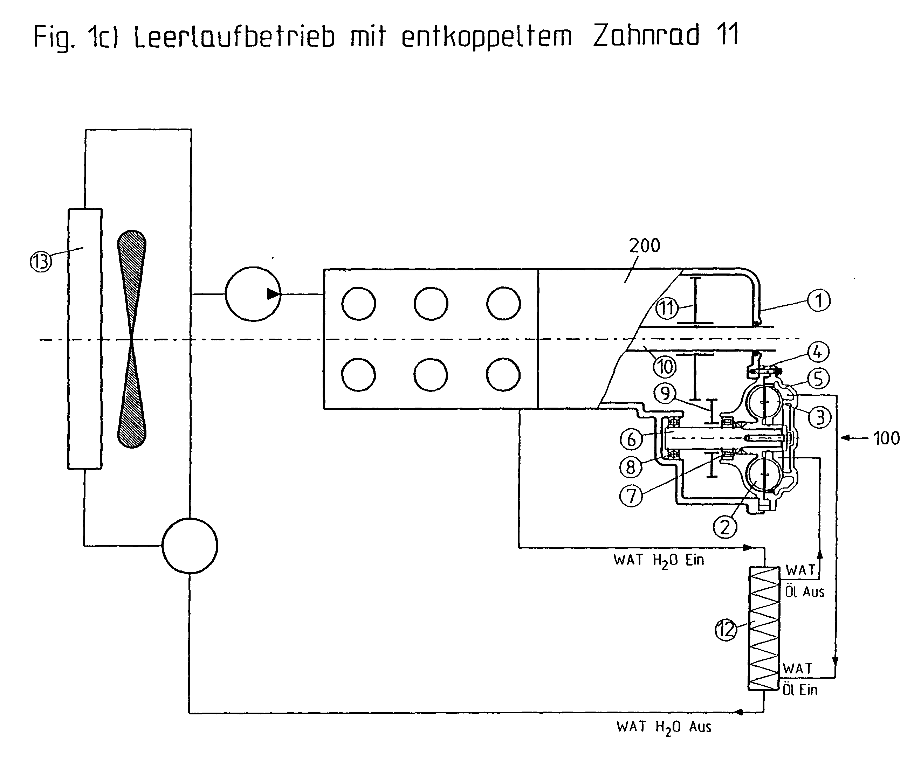

Im Bremsbetrieb, wie in der Figur 1 dargestellt, stehen Zahnrad und Ritzel in Drehverbindung miteinander. Die Drehmomentenübertragung erfolgt somit von der Getriebewelle 10 auf die Rotorschaufelradwelle 6. Ist der Retarder mit dem zur Kühlung des Fahrzeugs verwendeten Medium befüllt, ist es erforderlich, da im Bremsbetrieb hohe Temperaturen anfallen, die Betriebsflüssigkeit - z.B. Öl - zu kühlen. Zu diesem Zweck ist ein Wärmetauscher 12 vorgesehen. Der Energieaustausch im Bremsbetrieb erfolgt somit über einen Öl-H₂O-Wärmetauscher, der ins Kühlsystem des Fahrzeuges integriert ist, d.h. der Wärmetauscher 12 ist wasserseitig mit einem Fahrzeugkühler 13 verbunden, die Ölseite des Wärmetauschers ist mit den Zu- und Ablaufkanälen des Statorschaufelrades 3 gekoppelt.

Die Figur 1b verdeutlicht eine Anordnung gemäß der Figur la im Retarder-Leerlaufbetrieb, d.h. im Nichtbremsbetrieb, wobei die Entkopplung der Rotorschaufelradwelle von der Getriebewelle 10 durch Entkopplung des Ritzels 9 realisiert wird. Das Ritzel 9 kann dazu beispielsweise auf einer Schiebewelle 101 drehfest angeordnet sein, welche die Rotorschaufelradwelle 6 umschließt und auf dieser axial verschiebbar ist. Die Figur lc verdeutlicht ebenfalls eine Möglichkeit zur Realisierung einer Entkopplung der Rotorschaufelradwelle 6 von der Getriebewelle 10. Der Grundaufbau entspricht auch hier dem in der Figur la beschriebenen, weshalb für gleiche Elemente die gleichen Bezugszeichen verwendet wurden. Im in der Figur lc dargestellten Fall verbleibt das Ritzel 9 in seiner Lage unverändert auf der Rotorschaufelradwelle 6, während das Zahnrad 11 von dem Ritzel 9 entkoppelt wird.

Zur Realisierung der Entkopplung sind verschiedene Möglichkeiten denkbar, die sich in der Anordnung bzw. der Befestigung von Ritzel und Zahnrad widerspiegeln. Diese sind jedoch dem Fachmann geläufige konstruktive Maßnahmen, weshalb hier im Einzelfall nicht auf diese eingangen wird.

Die Figur 2 verdeutlicht eine Anordnung gemäß der Figur 1, hier im Bremsbetrieb dargestellt, bei welcher die einzelnen Lager der Lagerung der Rotorschaufelradwelle 6 vertauscht wurden. Die Rotorschaufelradwelle stützt sich über das Loslager 7 am Getriebegehäuse 1 und das Festlager 8 am Rotorschaufelradgehäuse 4 ab, wobei das Rotorschaufelradgehäuse sich wiederum am Getriebegehäuse abstützt.

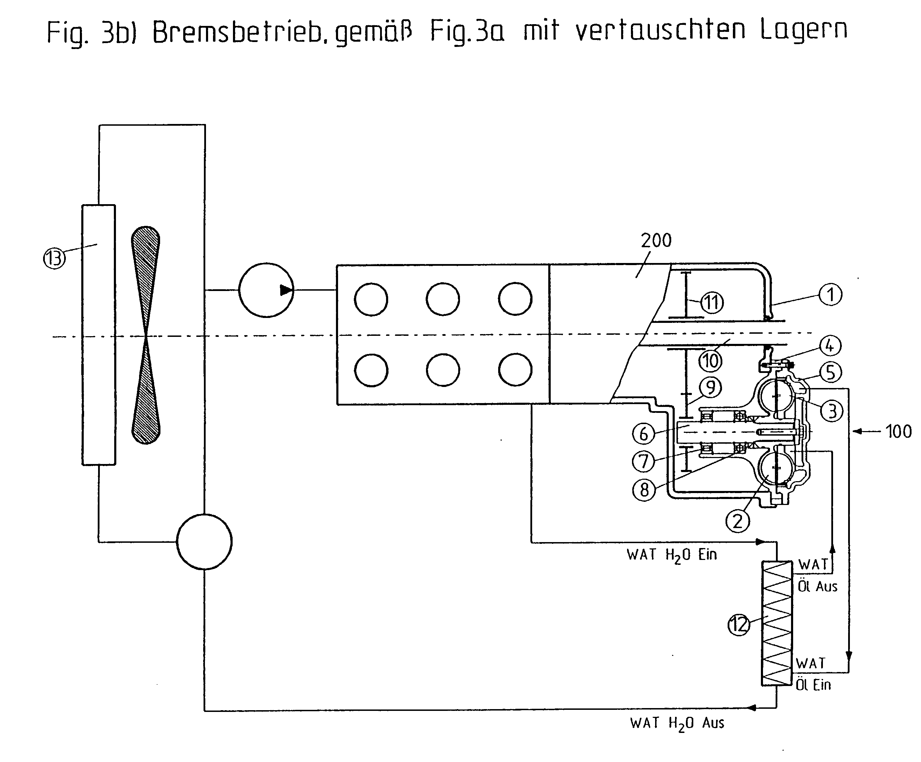

Die Figur 3a verdeutlicht eine Anordnung entsprechend der Figur la im Bremsbetrieb, bei der als Abwandlung auch das auf der Rotorschaufelradwelle 6 angeordnete Ritzel 9 fliegend gelagert ist. Für gleiche Elemente wurden deshalb gleiche Bezugszeichen verwendet. Auch hier ergibt sich die Möglichkeit, entweder das Ritzel 9 oder aber das Zahnrad 11 zu entkoppeln.

Die Figur 3b verdeutlicht eine Ausführung entsprechend der Figur 3a, wobei jedoch die Lager 7 und 8 der Lagerung der Rotorschaufelradwelle vertauscht wurden. Auch hier stützt sich die Rotorschaufelradwelle 6 über das Rotorschaufelradgehäuse 4 am Getriebeendgehäuse 1 ab. Möglichkeiten der Entkopplung sind sowohl für das Ritzel 9 als auch für das Zahnrad 11 vorsehbar.

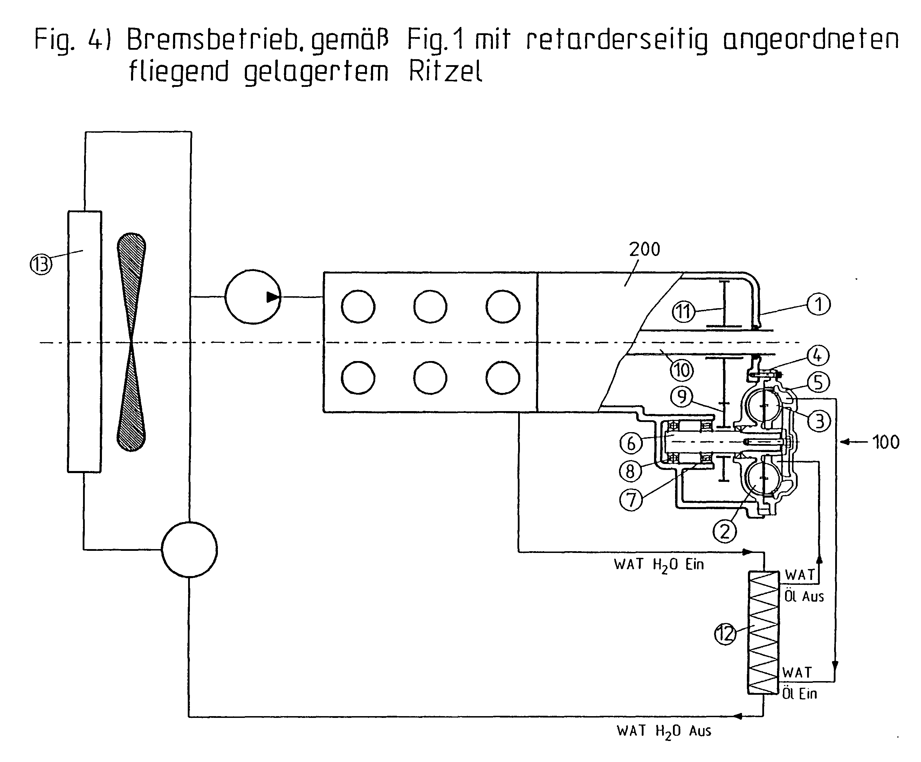

Die Figur 4 zeigt eine Ausführung mit einem im Getriebe integrierten hydrodynamischen Retarder, wobei die Rotorschaufelradwelle 6 von der Getriebewelle 10 entkoppelbar ist und die Drehmomentenübertragung von der Getriebewelle 10 über ein Zahnrad 11 auf das Ritzel, welches mit der Rotorschaufelradwelle drehfest verbindbar ist und welches getriebeausgangsseitig angeordnet ist, erfolgt. Das Ritzel 9 ist hier fliegend auf der Rotorschaufelradwelle 6 retarderseitig angeordnet. Dementsprechend kann auch eine analoge Ausführung mit retarderseitig fliegend gelagertem Ritzel 9 entsprechend der Figur 4, hier jedoch nicht dargestellt, mit Vertauschen der Lager der Lagerung realisiert werden.

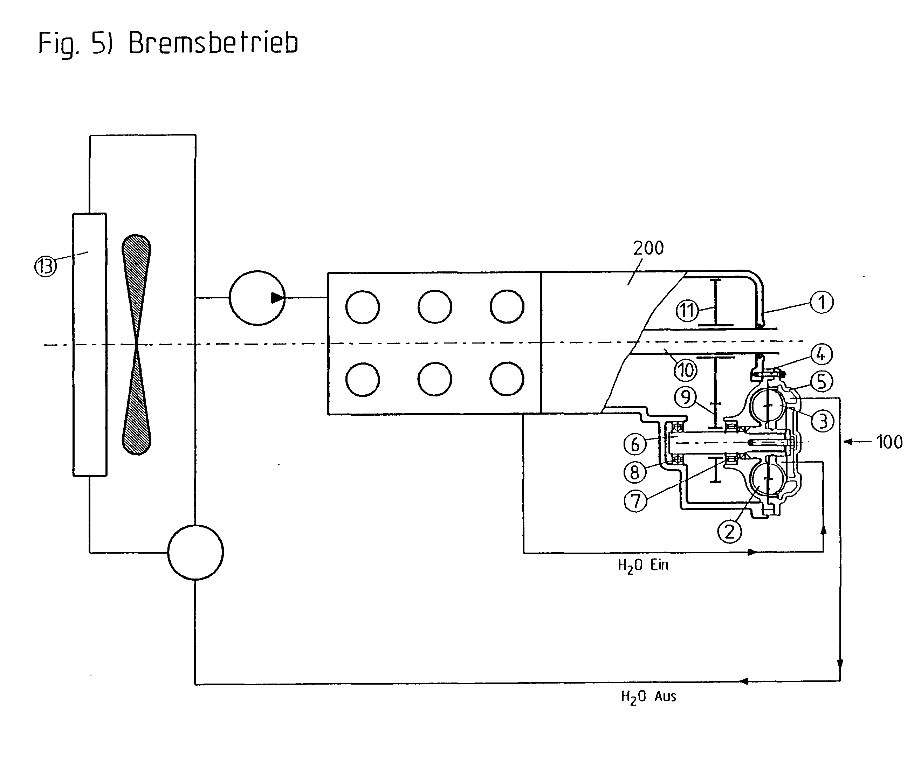

Die Figur 5 zeigt eine Ausführung mit im Getriebegehäuse integriertem hydrodynamischen Retarder 100, der einflutig oder mehrflutig mit dem Kühlmedium des Fahrzeugs betrieben wird. Dieser umfaßt ein Rotorschaufelrad 2, ein Statorschaufelrad 3, ein Rotorschaufelradgehäuse 4, ein Statorschaufelradgehäuse 5 und eine Rotorschaufelradwelle 6. Das Rotorschaufelrad ist dabei fliegend auf der Rotorschaufelradwelle 6 angeordnet. Die Lagerung des Rotorschaufelrades erfolgt auch hier über eine Lagerung bestehend aus einem Loslager 7 und einem Festlager 8, wobei die Abstützung über das Festlager 8 der Rotorschaufelradwelle 6 am Getriebegehäuse 1 erfolgt und die Abstützung über das Rotorschaufelradgehäuse 4 am Getriebegehäuse 1 über das Loslager 7. Die Lagerung befindet sich auch hier vollständig im Getriebe und kann deshalb vom Getriebeölhaushalt mit Schmieröl versorgt werden.

Die Rotorschaufelradwelle 6 ist parallel zu einer Getriebewelle 10 angeordnet. Die Getriebewelle 10 kann dabei der Getriebeausgangswelle entsprechen. Eine Drehmomentenübertragung von der Getriebewelle 10 auf die Rotorschaufelradwelle 6 erfolgt dabei über ein drehfest mit der Getriebewelle 10 verbindbares Zahnrad und einem mit der Rotorschaufelradwelle 6 drehfest verbindbaren Ritzel 9, die im Bremsbetrieb miteinander kämmen. Im Nichtbremsbetrieb besteht zur Entkopplung der Rotorschaufelradwelle von der Getriebewelle 10 die Möglichkeit, entweder das Ritzel 9 vom Zahnrad 11 zu entkoppeln oder aber auch umgekehrt. Durch diese Maßnahme wird der Retarder inaktiv, die Rotorschaufelrad-Drehzahl gleich Null gesetzt.

Bei dem in dieser Figur dargestellten hydrodynamischen Retarder handelt es sich um einen Wasserretarder. Zum Energieaustausch für den Bremsbetrieb kann dieser sofort ohne zusätzliche Maßnahmen in das Fahrzeugkühlsystem eingebunden werden. Dies bedeutet im einzelnen, daß die Zuund Ablaufkanäle des Retarder-Statorschaufelrades 3 mit dem Fahrzeugkühler bzw. dem Motoraustritt verbunden sind. Die Betriebsflüssigkeit, hier Wasser, wird dabei mittels dem Kühler 13 abgekühlt.

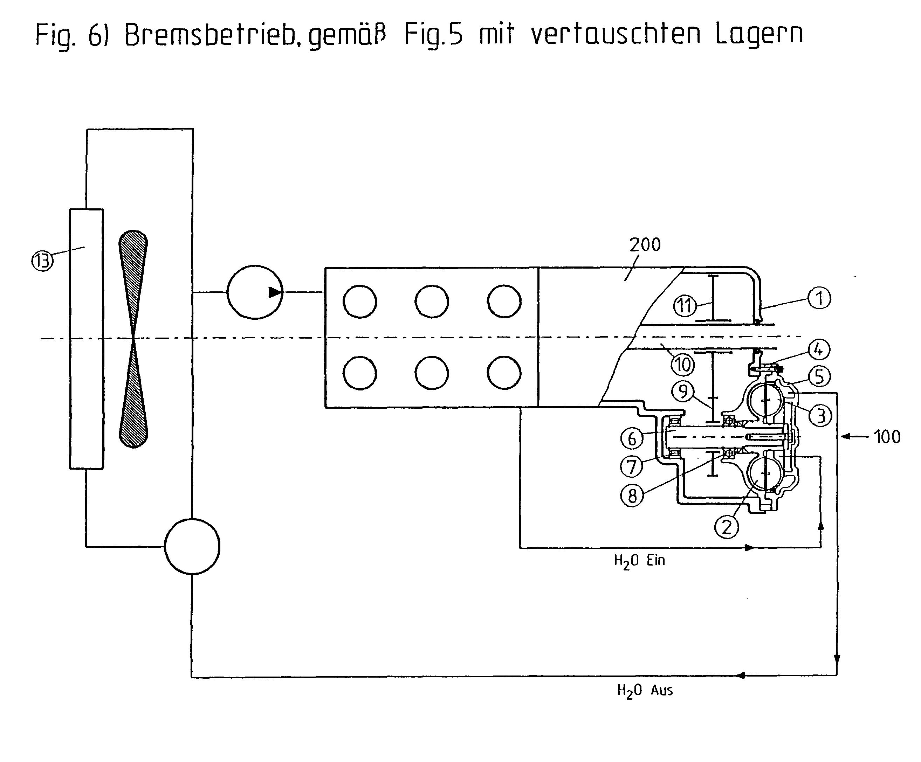

Die Figur 6 verdeutlicht eine Ausführung entsprechend der Figur 5, weshalb für gleiche Elemente die gleichen Bezugszahlen verwendet wurden. In dieser Ausführung wurden lediglich die Lager der Lagerung vertauscht, so daß sich die Rotorschaufelradwelle 6 am Getriebegehäuse über das Loslager 7 und am Getriebegehäuse 1 über das Rotorschaufelradgehäuse mittels dem Festlager 8 abstützt.

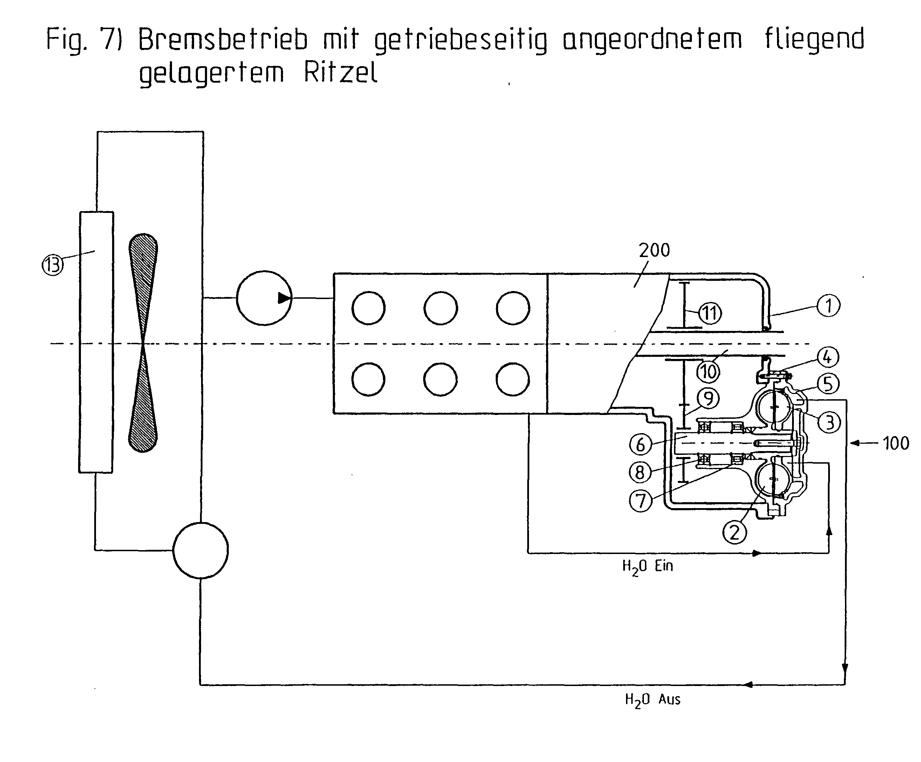

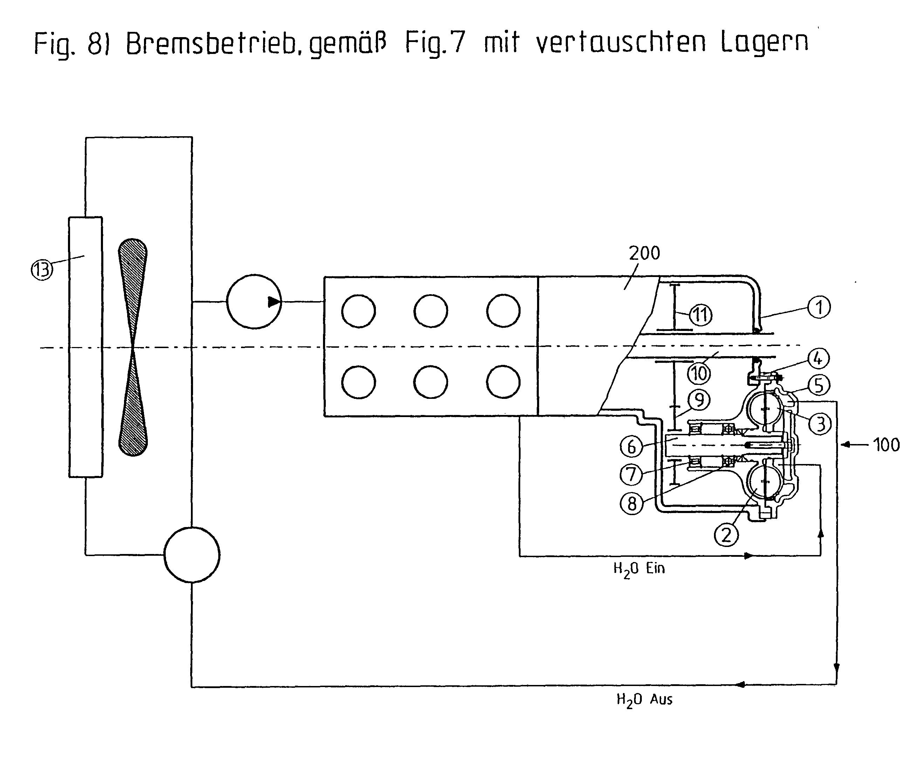

Die Figur 7 zeigt eine Ausführung entsprechend der Figur 5, wobei jedoch das Ritzel 9 fliegend auf der Rotorschaufelradwelle 6 getriebeseitig gelagert ist. Dementsprechend verdeutlicht die Figur 8 eine Anordnung entsprechend der Figur 7 mit vertauschten Lagern.

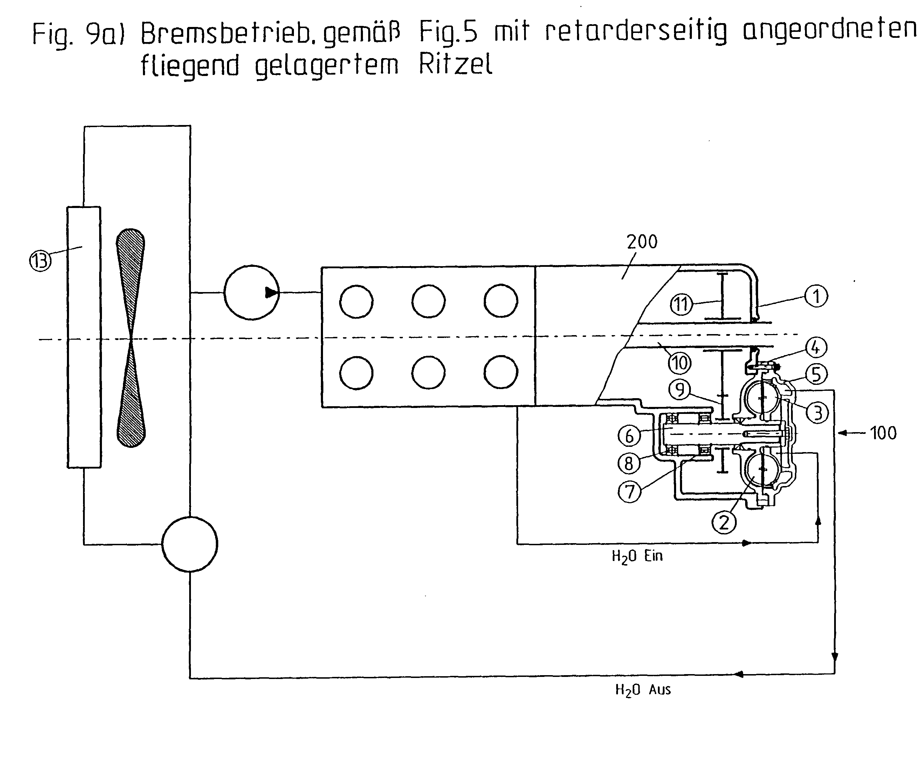

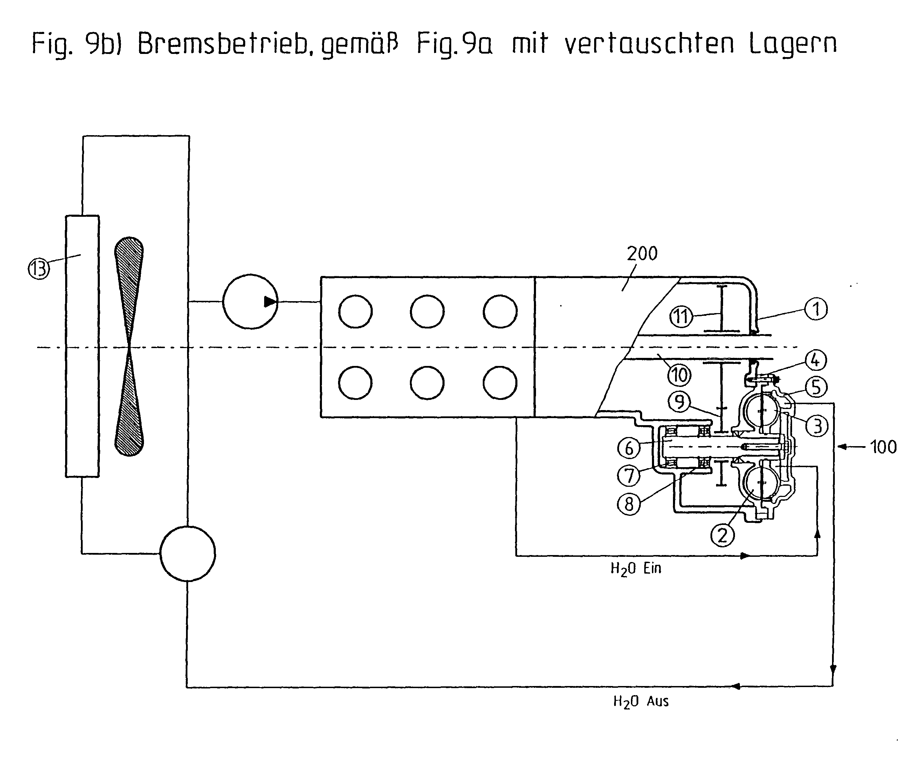

Die Figur 9a zeigt eine Ausführung entsprechend der Figur 5a im Bremsbetrieb, wobei jedoch das Ritzel 9 retarderseitig fliegend gelagert ist. In Analogie dazu zeigt die Figur 9b eine Ausführung entsprechend der Figur 9a, wobei jedoch die Lager 7 bzw. 8 in ihrer Lage vertauscht wurden.

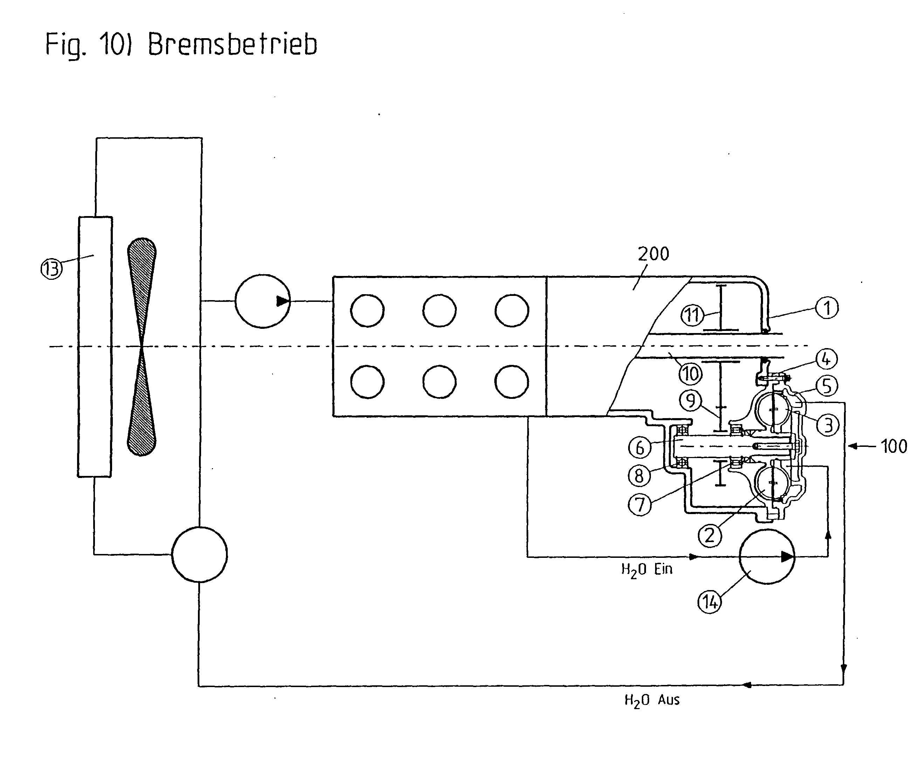

Die Figur 10 verdeutlicht eine Ausführung entsprechend der Figur 5 mit zusätzlicher auf der Rotorschaufelradwelle 6 oder einer separaten Welle angeordneten Kühlmittelpumpe 14, welche im Bremsbetrieb dazu dient, die motorseitig angeordnete Kühlmittelpumpe zusätzlich zu unterstützen. In dieser Figur ist die Anordnung der Kühlmittelpumpe 14 lediglich schematisch angedeutet, auf die Darstellung der konstruktiven Ausführung wurde verzichtet. Dadurch wird erzielt, daß der Kühlmitteldurchfluß im Bremsbetrieb geschwindigkeitsabhängig ist, d.h., daß bei hohen Geschwindigkeiten die Kühlmittelmengen gegenüber der üblichen Ausführung entsprechend der Figur 5a noch erhöht werden können und damit eine bessere Kühlleistung des Retarderkühlsystems erzielt wird. Auch für diese Ausführung ergeben sich eine Reihe von Möglichkeiten für die Anordnung des Ritzels 9 sowie die Ausführung der Lagerung der Rotorschaufelradwelle. Diese Möglichkeiten entsprechen denen in den vorangegangenen Figuren bereits beschriebenen, weshalb auf diese nicht mehr im einzelnen eingegangen werden soll.

Für die Anordnung und Lagerung der Rotorschaufelradwelle parallel zu einer Getriebewelle, vorzugsweise der Getriebeausgangswelle, sind weitere Möglichkeiten denkbar. Die konstruktive Gestaltung zur Erzielung einer parallelen Anordnung des Rotorschaufelrades zur Getriebewelle, wobei die Möglichkeit besteht, das Rotorschaufelrad von dieser zu entkoppeln, liegt im Ermessen des Fachmannes.

## Patentansprüche

1. Antriebseinheit für ein Kraftfahrzeug
1.1 mit einem Motor;
1.2 mit einem Getriebe (200);
1.3 mit einem hydrodynamischen Retarder (100), umfassend ein Rotorschaufelrad (2) und ein Statorschaufelrad (3);
1.4 der Motor und das Getriebe (200) sind im Hauptantriebsstrang angeordnet;
1.5 der hydrodynamische Retarder (100) ist dem Hauptantriebsstrang derart zugeordnet, daß das Rotorschaufelrad (2) des hydrodynamischen Retarders (100)über den Hauptantriebsstrang angetrieben wird;
1.6 das Betriebsfluid ist das zur Kühlung des Motors verwendete Medium;
1.7 der hydrodynamische Retarder (100) ist in einem Nebenzweig zum Hauptantriebsstrang angeordnet;
dadurch gekennzeichnet, daß
1.8 der hydrodynamische Retarder (100) im Getriebegehäuse (1) oder als selbständige Baueinheit hinter dem Getriebe (200) angeordnet ist.

2. Antriebseinheit nach Anspruch 1, dadurch gekennzeichnet, daß der Kühlmittelkreislauf des Retarders (100) so ausgebildet ist, daß er in den Kühlmittelkreislauf eines Kraftfahrzeuges integriert werden kann.

3. Antriebseinheit nach einem der Ansprüche 1 bis 2, dadurch gekennzeichnet, daß das Rotorschaufelrad (2) im Bremsbetrieb angetrieben, und im Nichtbremsbetrieb ohne Unterbrechung des Kraftflusses im Hauptantriebsstrang von diesem abkoppelbar ist.

4. Antriebseinheit nach einem der Ansprüche 1 bis 3, dadurch gekennzeichnet, daß im Zulauf zum Statorschaufelrad (3) des Retarders (100) eine Flüssigkeitsförderpumpe angeordnet ist.

5. Antriebseinheit nach einem der Ansprüche 1 bis 4, gekennzeichnet durch die folgenden Merkmale:
5.1 die Rotorschaufelradwelle (6) ist parallel zum Hauptantriebsstrang angeordnet;
5.2 auf der Rotorschaufelradwelle (6) ist ein mit dieser drehfest verbindbares Ritzel (9) angeordnet;
5.3 auf der Hauptantriebswelle (10) ist ein zum Ritzel (9) komplementäres Zahnrad (11) vorgesehen, welches mit dieser drehfest verbindbar ist;
5.4 das Zahnrad (11) und das Ritzel (9) stehen ständig miteinander im Eingriff;
5.5 es sind Mittel vorgesehen, die es ermöglichen, im Nichtbremsbetrieb die Drehmomentenübertragung zwischen Hauptantriebswelle und Nebenzweig zu unterbrechen.

6. Antriebseinheit nach Anspruch 5, dadurch gekennzeichnet, daß das Mittel eine synchronisierbare Klauenkupplung ist, mit welcher das Zahnrad (11) im Bremsbetrieb mit einer Welle im Hauptanstriebsstrang koppelbar und im Nichtbremsbetrieb entkoppelbar ist.

7. Antriebseinheit nach einem der Ansprüche 5 oder 6, dadurch gekennzeichnet, daß das Mittel eine synchronisierbare Klauenkupplung ist, mit welcher das Ritzel (9) im Bremsbetrieb mit der Rotorschaufelradwelle (6) koppelbar und im Nichtbremsbetrieb entkoppelbar ist.

8. Antriebseinheit nach einem der Ansprüche 1 bis 4, gekennzeichnet durch die folgenden Merkmale:
8.1 die Rotorschaufelradwelle (6) ist parallel zum Hauptantriebsstrang angeordnet;
8.2 das Rotorschaufelrad (2) ist auf der Rotorschaufelradwelle (6) fliegend gelagert;
8.3 auf der Rotorschaufelradwelle (6) ist ein mit dieser drehfest verbindbares Ritzel (9) angeordnet;
8.4 auf der Hauptantriebswelle ist ein zum Ritzel (9) komplementäres Zahnrad (11) vorgesehen, welches mit dieser drehfest verbindbar ist;
8.5 es sind Mittel vorhanden, die es ermöglichen, daß im Bremsbetrieb das Zahnrad (11) und das Ritzel (9) miteinander kämmen und im Nichtbremsbetrieb Zahnrad (11) und Ritzel (9) voneinander trennen.

9. Antriebseinheit nach einem der Ansprüche 1 bis 8, dadurch gekennzeichnet, daß das Rotorschaufelrad (2) auf der Rotorschaufelradwelle (6) fliegend gelagert ist.

10. Antriebseinheit nach einem der Ansprüche 1 bis 9, gekennzeichent durch die folgenden Merkmale:
10.1 das Rotorschaufelradgehäuse stützt sich am Getriebegehäuse (1) ab;
10.2 die Rotorschaufelradwelle (6) stützt sich über ein Loslager (7) direkt am Getriebegehäuse (1) und über ein Festlager (8) am Rotorschaufelradgehäuse ab.

11. Antriebseinheit nach einem der Ansprüche 1 bis 9, gekennzeichnet durch die folgenden Merkmale:
11.1 das Rotorschaufelradgehäuse (6) stützt sich am Getriebegehäuse ab;
11.2 die Rotorschaufelradwelle stützt sich über ein Festlager (8) am Getriebegehäuse und über ein Loslager (7) am Rotorschaufelradgehäuse ab.

12. Antriebseinheit nach einem der Ansprüche 5 bis 9, dadurch gekennzeichnet, daß das Ritzel (9) fliegend auf der Rotorschaufelradwelle (6) getriebeseitig gelagert ist.

13. Antriebseinheit nach einem der Ansprüche 5 bis 9, dadurch gekennzeichnet, daß das Ritzel (9) auf der Rotorschaufelradwelle (6) fliegend gelagert und retarderseitig angeordnet ist.

14. Antriebseinheit nach einem der Ansprüche 5 bis 13, dadurch gekennzeichnet, daß Ritzel und Zahnrad vertauscht sind.

## Claims

1. Propulsion unit for a motor vehicle
1.1 with a motor;
1.2 with a gearing (200);
1.3 with a hydro-dynamic retarder (100) comprising a rotor turbine wheel (2) and a stator turbine wheel (3);
1.4 the motor and the gearing (200) are arranged in the main propulsion line;
1.5 the hydro-dynamic retarder (100) is associated with the main propulsion line in such a manner that the rotor turbine wheel (2) of the hydro-dynamic retarder (100) is propelled via the main propulsion line;
1.6 the operating fluid is the medium used for cooling the motor;
1.7 the hydro-dynamic retarder (100) is arranged in a branch of the main propulsion line;
**characterised in that**
1.8 the hydro-dynamic retarder (100) is arranged in the gear casing (1) or as an independent assembly unit behind the gearing (200).

2. Propulsion unit according to Claim 1, **characterised in that** the cooling medium circuit of the retarder (100) is designed in such a manner that it can be integrated in the cooling medium circuit of a motor vehicle.

3. Propulsion unit according to one of Claims 1 to 2, **characterised in that** the rotor turbine wheel (2) is propelled during a braking operation, and disconnectable therefrom without interruption of the flow of power in the main propulsion line when not in a braking operation.

4. Propulsion unit according to one of Claims 1 to 3, **characterised in that** a fluid conveying pump is associated with the feed to the stator turbine wheel (3) of the retarder (100).

5. Propulsion unit according to one of Claims 1 to 4, **characterised by** the following features:
5.1 the rotor turbine wheel shaft (6) is arranged parallel to the main propulsion line;
5.2 on the rotor turbine wheel shaft (6) is arranged a pinion (9) which is non-rotationally connectable thereto;
5.3 on the main propulsion shaft (10) is provided a toothed wheel (11) which complements the pinion (9) and which is non-rotationally connectable thereto;
5.4 the toothed wheel (11) and the pinion (9) are permanently engaged relative to each other;
5.5 means are provided which make it possible to interrupt the rotary torque transfer between main propulsion shaft and branch when not in braking operation.

6. Propulsion unit according to Claim 5, **characterised in that** the means is a synchronisable claw coupling by means of which the toothed wheel (11) can be coupled to a shaft in the main propulsion line during a braking operation and uncoupled therefrom when not in a braking operation.

7. Propulsion unit according to one of Claims 5 or 6, **characterised in that** the means is a synchronisable claw coupling by means of which the pinion (9) can be coupled to the rotor turbine wheel shaft (6) during a braking operation and uncoupled when not in a braking operation.

8. Propulsion unit according to one of Claims 1 to 4, **characterised by** the following features:
8.1 the rotor turbine wheel shaft (6) is arranged parallel to the main propulsion line;
8.2 the rotor turbine wheel (2) is floatingly mounted on the rotor turbine wheel shaft (6);
8.3 on the rotor turbine wheel shaft (6) is arranged a pinion (9) which is non-rotationally mountable thereto;
8.4 on the main propulsion shaft is provided a toothed wheel (11) which complements the pinion (9) and which is non-rotationally connectable thereto;
8.5 there are means which make it possible for the toothed wheel (11) and the pinion (9) to mesh when in a braking operation and to separate the toothed wheel (11) and the pinion (9) from each other when not in a braking operation.

9. Propulsion unit according to one of Claims 1 to 8, **characterised in that** the rotor turbine wheel (2) is floatingly mounted on the rotor turbine wheel shaft (6).

10. Propulsion unit according to one of Claims 1 to 9, **characterised by the** following features:
10.1 the rotor turbine wheel casing supports itself against the gear casing (1);
10.2 the rotor turbine wheel shaft (6) supports itself via a loose mount (7) directly against the gear casing (1) and via a fixed mount (8) against the rotor turbine wheel casing.

11. Propulsion unit according to one of Claims 1 to 9, **characterised by** the following features:
11.1 the rotor turbine wheel casing (6) supports itself against the gear casing;
11.2 the rotor turbine wheel shaft supports itself via a fixed mount (8) against the gear casing and via a loose mount (7) against the rotor turbine wheel casing.

12. Propulsion unit according to one of Claims 5 to 9, **characterised in that** the pinion (9) is floatingly mounted on the gear side of the rotor turbine wheel shaft (6).

13. Propulsion unit according to one of Claims 5 to 9, **characterised in that** the pinion (9) is floatingly mounted on the rotor turbine wheel shaft (6) and at the side of the retarder.

14. Propulsion unit according to one of Claims 5 to 13, **characterised in that** the pinion and the toothed wheel are interchanged.

## Revendications

1. Unité de propulsion pour un véhicule automobile
1.1 avec un moteur ;
1.2 avec un réducteur (200) ;
1.3 avec un ralentisseur (100) hydrodynamique, comprenant un aubage de rotor (2) et un aubage de stator (3) ;
1.4 le moteur et le réducteur (200) sont disposés dans la ligne de propulsion principale ;
1.5 le ralentisseur (100) hydrodynamique est associé à la ligne de propulsion principale de manière telle que l'aubage de rotor (2) du ralentisseur (100) hydrodynamique soit entraîné par la ligne principale ;
1.6 le fluide de service est l'agent utilisé pour le refroidissement du moteur ;
1.7 le ralentisseur (100) hydrodynamique est disposé dans une branche secondaire de la branche de propulsion principale ;
1.8 caractérisée en ce que
1.9 le ralentisseur (100) hydrodynamique est placé dans le carter de réducteur (1) ou à la suite du réducteur (200) en tant qu'unité de construction indépendante.

2. Unité de propulsion selon la revendication 1, caractérisée en ce que le circuit d'agent de refroidissement du ralentisseur (100) est conçu de manière à ce qu'il puisse être intégré dans le circuit de refroidissement d'un véhicule automobile.

3. Unité de propulsion selon une des revendications 1 à 2, caractérisée en ce que l'aubage de rotor (2), en mode de freinage, est entraîné et, hors mode de freinage, peut être découplé de la ligne de propulsion principale sans interruption de la transmission de l'effort.

4. Unité de propulsion selon une des revendications 1 à 3, caractérisée en ce qu'une pompe d'alimentation en liquide est disposée dans la conduite d'alimentation menant à l'aubage de stator (3) du ralentisseur (100).

5. Unité de propulsion selon une des revendications 1 à 4, caractérisée en ce qu'elle présente les caractéristiques suivantes :
5.1 l'arbre (6) de l'aubage de rotor est disposé parallèlement à la ligne de propulsion principale ;
5.2 sur l'arbre (6) de l'aubage de rotor est monté un pignon (9) qui peut être rendu solidaire en rotation dudit arbre ;
5.3 sur l'arbre de propulsion principal (10) est prévue une roue dentée (11) complémentaire du pignon (9) qui peut être rendue solidaire en rotation dudit arbre ;
5.4 la roue dentée (11) et le pignon (9) sont constamment en prise l'un avec l'autre ;
5.5 des moyens sont prévus qui permettent d'interrompre la transmission du couple entre l'arbre de propulsion principal et la branche secondaire.

6. Unité de propulsion selon la revendication 5, caractérisée en ce que le moyen est un accouplement à griffes synchronisé, à l'aide duquel la roue dentée (11) peut être couplée à un arbre de la ligne de propulsion principale en mode freinage et découplée dudit arbre en mode hors freinage.

7. Unité de propulsion selon la revendication 5 ou 6, caractérisée en ce que le moyen est un accouplement à griffes synchronisé, à l'aide duquel le pignon (9) peut être couplé à l'arbre (6) d'aubage de rotor en mode freinage et découplé dudit arbre en mode hors freinage.

8. Unité de propulsion selon une des revendications 1 à 4, caractérisée en ce qu'elle présente les caractéristiques suivantes :
8.1 l'arbre d'aubage de rotor (6) est disposé parallèlement à la ligne de propulsion principale ;
8.2 l'aubage de rotor (2) est monté flottant sur l'arbre d'aubage de rotor (6) ;
8.3 sur l'arbre (6) de l'aubage de rotor est monté un pignon (9) qui peut être rendu solidaire en rotation dudit arbre ;
8.4 sur l'arbre de propulsion principal est prévue une roue dentée (11) complémentaire du pignon (9) qui peut être rendue solidaire en rotation dudit arbre ;
8.5 des moyens sont prévus qui permettent l'engrènement réciproque du pignon (9) et de la roue dentée (11) en mode freinage et séparent l'un de l'autre le pignon (9) et la roue dentée (11) en mode hors freinage.

9. Unité de propulsion selon une des revendications 1 à 8, caractérisée en ce l'aubage de rotor (2) est monté flottant sur l'arbre (6) d'aubage de rotor.

10. Unité de propulsion selon une des revendications 1 à 9, caractérisée en ce qu'elle présente les caractéristiques suivantes :
10.1. le carter d'aubage de rotor repose dans le carter de réducteur (1);
10.2. l'arbre (6) d'aubage de rotor est supporté par un palier libre (7) directement dans le carter de réducteur (1) et par un palier fixe (8) dans le carter d'aubage de rotor.

11. Unité de propulsion selon une des revendications 1 à 9, caractérisée en ce qu'elle présente les caractéristiques suivantes :
11.1 le carter d'aubage de rotor (6) repose sur le carter de réducteur ;
11.2 l'arbre d'aubage de rotor est supporté par un palier fixe (8) dans le carter de réducteur et par un palier libre (7) dans le carter d'aubage de rotor.

12. Unité de propulsion selon une des revendications 5 à 9, caractérisée en ce que le pignon (9) est monté flottant côté réducteur sur l'arbre (6) d'aubage de rotor.

13. Unité de propulsion selon une des revendications 5 à 9, caractérisée en ce que le pignon (9) est monté flottant sur l'arbre (6) d'aubage de rotor et est disposé côté ralentisseur.

14. Unité de propulsion selon une des revendications 5 à 13, caractérisée en ce que le pignon et la roue dentée sont permutés.
